# EUROPEAN PATENT APPLICATION

(11) **EP 2 549 783 A1**
(43) Date of publication of application: **23.01.2013**
(21) Application number: 11843711.0
(22) Date of filing: 18.04.2011
(51) Int. Cl.: H04W 8/22, H04W 88/02

(54) **MOBILE TERMINAL, SYSTEM AND METHOD FOR REALIZING ACCESS POINT NAME SETTING**

(30) Priority: 25.11.2010 CN 201010560565
(71) Applicant: ZTE Corporation, Shenzhen, Guangdong 518057 (CN)
(72) Inventor: LU, Daming, Shenzhen Guangdong 518057 (CN); ZHANG, Rui, Shenzhen Guangdong 518057 (CN); FANG, Lijun, Shenzhen Guangdong 518057 (CN); TAO, Gang, Shenzhen Guangdong 518057 (CN); ZHENG, Hongtao, Shenzhen Guangdong 518057 (CN)
(74) Representative: Krauns, Christian
(86) International application number: PCT/CN2011/072948
(87) International publication number: WO 2012/068821

(57) **Abstract**

A system for implementing an access point name setting is disclosed in the present invention, including: a mobile terminal and an access point name server, wherein, the mobile terminal is configured to: when access point name information is required to be set, send an access point name inquiry request to the access point name server; the access point name server is configured to: after receiving the access point name inquiry request of the mobile terminal, carry the access point name information corresponding to the mobile terminal in an access point name inquiry response to return to the mobile terminal. A mobile terminal and method for implementing the access point name setting are also disclosed in the present invention. With the present invention, the mobile terminal is enabled to perform automatic setting for an APN conveniently, bringing great convenience to a mobile terminal user.

## Description

### Technical Field

The present invention relates to an extension technology of mobile terminal application service in mobile communication system, and particularly, to a mobile terminal and a system and method for implementing an Access Point Name (APN) setting.

### Background of the Related Art

Currently, with the development of the mobile internet, a mobile terminal user surfing the Internet through a mobile terminal (such as a mobile phone terminal or portable computer and so on) has become a common demand. However, before using the mobile terminal to access the Internet, a user is required to set an APN. When the mobile terminal user sets the APN, it is required to know APN information used by the current terminal, and then perform manual setting, which brings great inconvenience to the user.

Secondly, when an operator needs to perform service extension or service change, if newly adding the APN or changing the APN are involved, how to notify the terminal user to perform APN setting or change effectively also will bring great inconvenience to the operator.

Furthermore, with the development of the mobile internet, a virtual operator appears. The virtual operator will generally use the APN information of the operator himself to perform packet data field calls, but since the network of the virtual operator is rented, if the mobile terminal user sets the APN as the APN of other operators, packet data field services also can be used similarly, which will bring certain loss to the virtual operator which provides services for the mobile terminal user.

Therefore, with respect to the above problem, it is required to provide a method that can implement the setting and change of the APN information in an automatic way, which not only facilitates the operator to perform service extension, but also can bring great convenience to the terminal user.

Currently, with the methods disclosed by the following patent literatures, automatic setting of the APN information can be implemented.

The patent literature with an invention title "METHOD FOR SELF-ADAPTIVELY CONFIGURING ACCESS POINT NAME ON MOBILE TERMINAL" and a patent application number CN200810089261.X describes a method for configuring the APN automatically through a human-computer interface application program. The method has following defects.
1) The APN information stored in a flash memory of the mobile terminal is not easy to be updated timely when the APN information is changed.
2) The APN information needs to be inquired each time the mobile terminal is started, when the APN information in the mobile terminal becomes more and more with the demand of the services, the startup speed and efficiency will be influenced.

The patent literature with an invention title "METHOD, SYSTEM AND NETWORK ELEMENT FOR ACQUIRING GGSN ADDRESS OF SUBSCRIBER LOCATION" and a patent application number CN200610098446 describes a method for matching the APN, in which a data matching unit and an APN custom unit are added on a network element Serving GPRS Support Node (SGSN), wherein, when the user initiates a Packet Data Protocol (PDP) activation request, the data matching unit will perform APN matching according to International Mobile Subscriber Identity (IMSI) information and the APN information carried in the PDP request. The method has following defects.
1) No convenience is provided for the mobile terminal user with respect to APN matching.
2) It is required to add the IMSI information and APN matching information of all roaming users on the network element SGSN.
3) When matching information of the APN is changed, it is required to perform information change for all network elements SGSNs which have the matching information, which brings great inconvenience to information maintenance of the operator.

### Summary of the Invention

The technical problem required to be solved by the present invention is to provide a mobile terminal, and a system and method for implementing an access point name setting, which enables the mobile terminal to perform automatic setting for an APN conveniently.

In order to solve the above technical problem, the present invention provides a system for implementing an access point name setting, which comprises a mobile terminal and an access point name server, wherein:
the mobile terminal is configured to: when access point name information is required to be set, send an access point name inquiry request to the access point name server;
the access point name server is configured to: after receiving the access point name inquiry request of the mobile terminal, carry the access point name information corresponding to the mobile terminal in an access point name inquiry response to return to the mobile terminal.

The access point name server comprises a communication module and an access point name database which are interconnected, wherein:
the access point name inquiry request carries international mobile subscriber identity information of a current universal subscriber identity module;
the mobile terminal is further configured to: set the access point name information carried in the access point name inquiry response;
the communication module is configured to: according to the international mobile subscriber identity information carried in the access point name inquiry request, inquire about a corresponding relation record of the international mobile subscriber identity information and access point name information in the access point name database, find the access point name information corresponding to the international mobile subscriber identity information with a maximum matching mode, and carry the access point name information in the access point name inquiry response to return to the mobile terminal; and
the access point name database is configured to: save the corresponding relation record of the international mobile subscriber identity information and the access point name information.
Wherein,
the communication module is further configured to: when a corresponding relation between the international mobile subscriber identity information and the access point name information in the access point name database is changed, initiate an access point name change command carrying the changed access point name information to the mobile terminal;
the mobile terminal is further configured to: perform the access point name setting according to the received access point name change command.

The mobile terminal comprises an access point name configuration module and a radio communication module which are interconnected, wherein:
the access point name configuration module is configured to: send an international mobile subscriber identity inquiry request to the radio communication module when starting up, compare the international mobile subscriber identity information returned by the radio communication module with the international mobile subscriber identity information in the access point name information, and if the two are different, send the access point name inquiry request to the radio communication module;
the radio communication module is configured to: according to the international mobile subscriber identity inquiry request, carry the international mobile subscriber identity information of the current universal subscriber identity module in an international mobile subscriber identity inquiry response to return to the access point name configuration module.

The mobile terminal comprises the access point name configuration module and radio communication module which are interconnected, wherein:
the radio communication module is configured to: after sending a packet data protocol activation request to a network side network element and encountering a packet data protocol activation rejection from the network element, send a reason for a packet data protocol activation failure to the access point name configuration module;
the access point name configuration module is configured to: if it is analyzed that the packet data protocol activation failure is caused by an error of the access point name information, send the access point name inquiry request to the radio communication module.
Wherein,
the radio communication module is further configured to: according to the access point name inquiry request, send the access point name inquiry request to the access point name server; and return the access point name inquiry response returned by the access point name server to the access point name configuration module;
the access point name configuration module is further configured to: set the access point name information carried in the access point name inquiry response.

In order to solve the above technical problem, the present invention further provides a mobile terminal for implementing an access point name setting, which comprises an access point name configuration module and a radio communication module that are interconnected, wherein:
the access point name configuration module is configured to: when access point name information is required to be set, send an access point name inquiry request to the radio communication module;
the radio communication module is configured to: according to the received access point name inquiry request, send the access point name inquiry request to an access point name server.
Wherein,
when the access point name information is required to be set, the access point name configuration module is configured to send the access point name inquiry request to the radio communication module in the following way: sending an international mobile subscriber identity inquiry request to the radio communication module when starting up, comparing international mobile subscriber identity information returned by the radio communication module with the international mobile subscriber identity information in the access point name information, and if the two are different, sending the access point name inquiry request to the radio communication module;
the radio communication module is further configured to: according to the international mobile subscriber identity inquiry request, carry the international mobile subscriber identity information of a current universal subscriber identity module in an international mobile subscriber identity inquiry response to return to the access point name configuration module.
Wherein,
the radio communication module is further configured to: after sending a packet data protocol activation request to a network side network element and encountering a packet data protocol activation rejection from the network element, send a reason for a packet data protocol activation failure to the access point name configuration module;
the access point name configuration module is configured to: when the access point name information is required to be set, send the access point name inquiry request to the radio communication module in the following way: if it is analyzed that the packet data protocol activation failure is caused by an error of the access point name information, sending the access point name inquiry request to the radio communication module.
Wherein,
the radio communication module is further configured to: return an access point name inquiry response returned by the access point name server to the access point name configuration module;
the access point name configuration module is further configured to: set the access point name information carried in the access point name inquiry response.

In order to solve the above technical problem, the present invention further provides a method for implementing an access point name setting, which comprises:
a mobile terminal sending an access point name inquiry request to an access point name server when access point name information is required to be set; and
the access point name server which receives the access point name inquiry request returning the access point name information corresponding to the mobile terminal to the mobile terminal through an access point name inquiry response.

The method further comprises:
the terminal mobile performing setting according to the access point name information returned by the access point name server.
Wherein,
the access point name inquiry request carries international mobile subscriber identity information of a universal subscriber identity module;
the step of the access point name server returning the access point name information corresponding to the mobile terminal to the mobile terminal through an access point name inquiry response comprises: according to the international mobile subscriber identity information carried in the access point name inquiry request, the access point name server inquiring about a corresponding relation record of the international mobile subscriber identity information and access point name information, finding the access point name information corresponding to the international mobile subscriber identity information with a maximum matching mode, and carrying the access point name information in the access point name inquiry response to return to the mobile terminal.

Wherein, the step of a mobile terminal sending an access point name inquiry request to an access point name server when access point name information is required to be set comprises:
the mobile terminal inquiring about the international mobile subscriber identity information of the current universal subscriber identity module when starting up, comparing the international mobile subscriber identity information with the international mobile subscriber identity information in the access point name information, and if the two are different, sending the access point name inquiry request;
or, after sending a packet data protocol activation request to a network side network element and encountering a packet data protocol activation rejection from the network element, if it is analyzed that a packet data protocol activation failure is caused by an error of the access point name information, the mobile terminal sending the access point name inquiry request.

The method further comprises:
when the access point name server changes the corresponding relation record of the international mobile subscriber identity information and access point name information, carrying the changed access point name information in an access point name change command to send to the mobile terminal; and
the mobile terminal performing setting according to the received access point name change command.

Compared with the related art, with the present invention, the mobile terminal is enabled to perform automatic setting for the APN conveniently, bringing great convenience to a mobile terminal user; when an operator needs to change the APN information of the mobile terminal, it is only required to interact with the mobile terminal through the APN server, which can guarantee that the served mobile terminal changes the APN information, thereby also bringing great convenience to the operator for developing and changing services.

### Brief Description of Drawings

FIG. 1 is a structure diagram of the example of the system for implementing an access point name setting according to the present invention.
FIG. 2 is a flow diagram of APN inquiry initiated by the mobile terminal when starting up in the example of the method for implementing an access point name setting according to the present invention.
FIG. 3 is a flow diagram of APN inquiry triggered by the mobile terminal during a PDP dialing failure in the example of the method for implementing an access point name setting according to the present invention.

### Preferred Embodiments of the Present Invention

In order to make the object, technical scheme and advantages of the present invention more clear, the technical scheme of the present invention will be described in detail in combination with the accompanying drawings and preferred examples below. The examples illustrated below are only used to describe and explain the present invention, but do not constitute a limitation on the present invention. It should be noted that the examples in the present invention and technical characteristics in the examples can be combined with each other arbitrarily in the condition of no conflict.

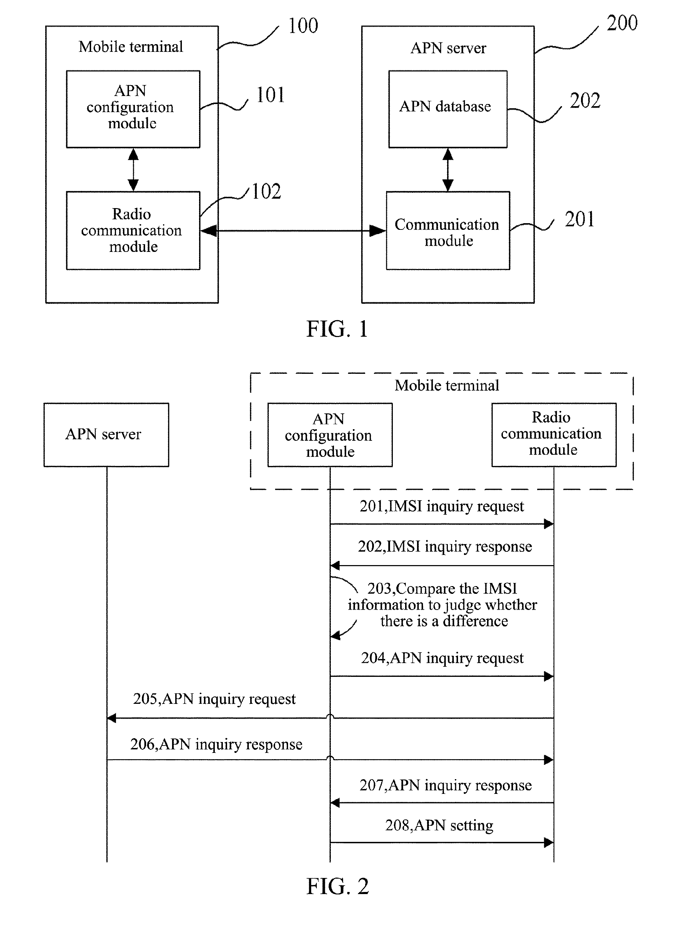

As shown in FIG. 1, it is the example of the system for implementing an access point name setting provided by the present invention, and the system includes a mobile terminal 100 and an APN server 200, wherein:
the mobile terminal 100 is configured to: when APN information is required to be set, send an APN inquiry request to the APN server; and according to an APN inquiry response returned by the APN server, set the APN information;
the APN server 200 is configured to: after receiving the APN inquiry request from the mobile terminal 100, carry the APN information corresponding to the mobile terminal in the access point name inquiry response to return to the mobile terminal 100.

The APN inquiry request sent by the mobile terminal 100 to the APN server carries IMSI information of a current Universal Subscriber Identity Module (USIM) card; and the mobile terminal 100 sets the APN information carried in the APN inquiry response returned by the APN server 200;
the APN server 200 inquires about a corresponding relation between the saved IMSI information and APN information according to the IMSI information carried in the APN inquiry request, and carries the inquired APN information corresponding to the IMSI information in the APN inquiry response to return to the mobile terminal 100.

The mobile terminal 100 needs to set the APN information in the following two conditions.
1. The mobile terminal 100 inquires about the IMSI information in the USIM card when starting up, compares the IMSI information with the IMSI information in the APN information, and if the two are different, initiates an operation of the APN inquiry request to the APN server.
2. After sending a PDP activation request (i.e. PDP dialing) to a network side network element (e.g. an SGSN) and encountering a PDP activation rejection from the network side network element, if it is analyzed that a reason for a PDP activation failure is caused by an error of the APN information, the mobile terminal 100 initiates the APN inquiry request to the APN server.

The APN server 200 initiates an APN change command carrying the changed APN information to the mobile terminal when the corresponding relation between the IMSI information and APN information is changed;
the mobile terminal 100 performs the APN setting according to the APN information carried in the received APN change command.

In the example of the system for implementing the access point name setting as shown in FIG. 1, the mobile terminal 100 is a mobile terminal which has a packet domain data function and includes an APN configuration module 101 and a radio communication module 102, wherein:
the APN configuration module 101 is configured to: send an IMSI inquiry request to the radio communication module 102 when a terminal system is started, compare the IMSI information carried in an IMSI inquiry response returned by the radio communication module 102 with the IMSI information in the APN information, and if comparison results are different, send the APN inquiry request to the radio communication module102;
the radio communication module 102 is configured to: after receiving the IMSI inquiry request sent by the APN configuration module 101, carry the IMSI information of the USIM card (or a Subscriber Identity Module (SIM) card, or a User Identity Model (UIM) card) in the IMSI inquiry response to return to the APN configuration module 101.

After sending the PDP activation request to the network side network element and encountering the PDP activation rejection from the network element, the radio communication module 102 sends a reason for the PDP activation failure to the APN configuration module 101;
if it is analyzed that the PDP activation failure is caused by the error of the APN information, the APN configuration module 101 sends the APN inquiry request to the radio communication module 102.

The radio communication module 102 sends the APN inquiry request to the APN server according to the APN inquiry request received by the APN configuration module 101; and returns the APN inquiry response returned by the APN server to the APN configuration module 101;
the APN configuration module 101 performs the APN setting according to the APN information carried in the received APN inquiry response.

In the example of the system for implementing the access point name setting as shown in FIG. 1, the APN server includes a communication module 201 and an APN database 202 in interconnection, wherein:
the communication module 201 is configured to: after receiving the APN inquiry request from the mobile terminal, according to the IMSI information carried in the corresponding request, inquire about a corresponding relation record of the saved IMSI information and APN information in the APN database 202, and carry the inquired APN information corresponding to the IMSI information in the APN inquiry response to return to the mobile terminal 100;
the APN database 202 is configured to: save the corresponding relation record of the IMSI information and APN information.

The corresponding relation record of the IMSI information and APN information saved by the APN database 202 is as shown in Table 1.

**Table 1**

| IMSI Number Segment | APN Information | Operator Description |
|---|---|---|
| 46000 | cmnet | China Mobile |
| 460000290 | cmnet.sn | Shaanxi Mobile |
| 46001 | 3gnet | China Unicom |

The communication module 201 inquires about the corresponding relation record of the IMSI information and APN information in Table 1 with a maximum matching mode. It is assumed that the IMSI in the APN inquiry request message is 460000290123456, according to the maximum matching mode, the corresponding APN information found from Table 1 is cmnet.sn; it is assumed that the IMSI in the APN inquiry request message is 4600092091123456, according to the maximum matching mode, the corresponding APN information found from Table 1 is cmnet.

The communication module 201 sends the APN change command carrying the changed APN information to the mobile terminal when the corresponding relation record of the IMSI information and APN information in the APN database 202 is changed.

With respect to the above example of the system, the present invention also provides an example of the method for implementing an access point name setting correspondingly, and the example of the method includes:
a mobile terminal sending an APN inquiry request to an APN server when APN information is required to be set; and
the APN server which receives the APN inquiry request carrying the APN information corresponding to the mobile terminal in an APN inquiry response to return to the mobile terminal.

The example of the method also includes:
the terminal mobile performing the APN setting according to the APN information returned by the APN server.

In the above example of the method,
the APN inquiry request sent by the mobile terminal to the APN server carries IMSI information of a current USIM card;
the APN server inquires about a corresponding relation record of the IMSI information and APN information according to the IMSI information carried in the APN inquiry request, finds the APN information corresponding to the IMSI information with a maximum matching mode, and carries the APN information in the APN inquiry response to return to the mobile terminal.

The mobile terminal sending the APN inquiry request to the APN server when the APN information is required to be set specifically includes:
the mobile terminal inquiring about the IMSI information in the USIM card when starting up, comparing the IMSI information with the IMSI information in the APN information, and if comparison results are different, initiating the APN inquiry request to the APN server;
or, after sending a PDP activation request to a network side network element and encountering a PDP activation rejection from the network side network element, if it is analyzed that a reason for a PDP activation failure is caused by an error of the APN information, the mobile terminal initiating f the APN inquiry request to the APN server.

The example of the method also includes:
when a corresponding relation between the IMSI information and APN information is changed, the APN server initiating an APN change command carrying the changed APN information to the mobile terminal;
the mobile terminal performing the APN setting according to the received APN change command.

FIG. 2 illustrates a flow of APN inquiry initiated by the mobile terminal when starting up in the above example of the method according to the present invention, and the flow includes following steps.

In step 201, when a mobile terminal is started, an APN configuration module initiates an IMSI inquiry request to a radio communication module.

In step 202, after receiving the IMSI inquiry request, by inquiring an IMSI file in a USIM card, the radio communication module acquires IMSI information from the IMSI file and feeds the information back to the APN configuration module.

In step 203, the APN configuration module compares the saved IMSI information in the APN configuration information with the inquired IMSI information, if the two are different, it is to continue to execute step 204, and if the two are identical, the flow ends.

In step 204, the APN configuration module initiates an APN inquiry request message to the radio communication module.

In step 205, after receiving the APN inquiry request message, the radio communication module initiates an APN inquiry request to an APN server by means of a short message or Unstructured Supplementary Service Data (USSD).

In step 206, after receiving the APN inquiry request, the APN server inquires about the corresponding APN information from a database according to the IMSI information carried in the request, and carries the APN information in an APN inquiry response to return to the mobile terminal.

In step 207, after receiving the APN inquiry response returned by the APN server, the radio communication module forwards the response to the APN configuration module.

In step 208, after receiving the APN inquiry response, the APN configuration module sends an APN setting command to the radio communication module, and updates the IMSI information and APN information in the APN configuration information at the same time; the radio communication module performs APN setting according to the command.

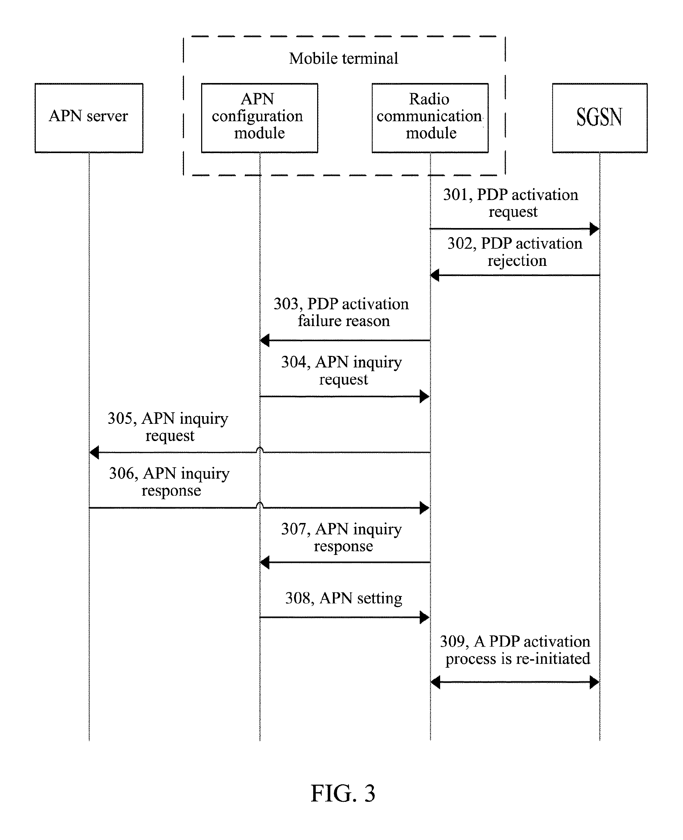

As shown in FIG. 3, it is a flow of APN inquiry triggered by the mobile terminal during a PDP dialing failure in the above example of the method according to the present invention, and the flow includes following steps.

In step 301, a mobile terminal initiates a PDP activation request to a network side network element SGSN due to the service requirement.

In step 302, after receiving the PDP activation request sent by the mobile terminal, the SGSN processes the PDP activation request, and if a PDP activation failure is determined, returns a PDP activation rejection to the mobile terminal.

In step 303, after receiving the PDP activation rejection returned by the SGSN, a radio communication module in the mobile terminal indicates a reason for the PDP activation failure to an APN configuration module.

In step 304, the APN configuration module analyzes the reason for the PDP activation failure, and if it is caused by an APN information error, it initiates an APN inquiry request to the radio communication module.

In step 305, after receiving the APN inquiry request, the radio communication module initiates the APN inquiry request to an APN server by means of a short message or USSD.

In step 306, after receiving the APN inquiry request, the APN server inquires about the corresponding APN information from a database according to IMSI information carried in the request, and carries the APN information in an APN inquiry response to return to the mobile terminal.

In step 307, after receiving the APN inquiry response returned by the APN server, the radio communication module forwards the response to the APN configuration module.

In step 308, after receiving the APN inquiry response, the APN configuration module sends an APN setting command to the radio communication module, and updates the IMSI information and APN information in APN configuration information at the same time; the radio communication module performs APN setting according to the command.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

Certainly, the present invention can still have other various examples. The skilled familiar with the art can make various corresponding changes and transformations according to the present invention without departing from the spirit and essence of the present invention, and these corresponding changes and transformations shall all fall into the protection scope of the appended claims of the present invention.

### Industrial Applicability

Compared with the related art, with the present invention, the mobile terminal is enabled to perform automatic setting for the APN conveniently, bringing great convenience to a mobile terminal user; when an operator needs to change the APN information of the mobile terminal, it is only required to interact with the mobile terminal through the APN server, which can guarantee that the served mobile terminal changes the APN information, thereby also bringing great convenience to the operator for developing and changing services.

## Claims

1. A system for implementing an access point name setting, comprising a mobile terminal and an access point name server, wherein:
the mobile terminal is configured to: when access point name information is required to be set, send an access point name inquiry request to the access point name server;
the access point name server is configured to: after receiving the access point name inquiry request from the mobile terminal, carry access point name information corresponding to the mobile terminal in an access point name inquiry response to return to the mobile terminal.

2. The system according to claim 1, wherein, the access point name server comprises a communication module and an access point name database which are interconnected, wherein:
the access point name inquiry request carries international mobile subscriber identity information of a current universal subscriber identity module;
the mobile terminal is further configured to: set the access point name information carried in the access point name inquiry response;
the communication module is configured to: according to the international mobile subscriber identity information carried in the access point name inquiry request, inquire about a corresponding relation record of the international mobile subscriber identity information and access point name information in the access point name database, find the access point name information corresponding to the international mobile subscriber identity information with a maximum matching mode, and carry the access point name information in the access point name inquiry response to return to the mobile terminal; and
the access point name database is configured to: save the corresponding relation record of the international mobile subscriber identity information and access point name information.

3. The system according to claim 2, wherein,
the communication module is further configured to: when a corresponding relation between the international mobile subscriber identity information and access point name information in the access point name database is changed, initiate an access point name change command carrying changed access point name information to the mobile terminal;
the mobile terminal is further configured to: perform the access point name setting according to the received access point name change command.

4. The system according to claim 2, wherein, the mobile terminal comprises an access point name configuration module and a radio communication module which are interconnected, wherein:
the access point name configuration module is configured to: send an international mobile subscriber identity inquiry request to the radio communication module when starting up, compare the international mobile subscriber identity information returned by the radio communication module with the international mobile subscriber identity information in the access point name information, and if the two are different, send the access point name inquiry request to the radio communication module;
the radio communication module is configured to: according to the international mobile subscriber identity inquiry request, carry the international mobile subscriber identity information of the current universal subscriber identity module in an international mobile subscriber identity inquiry response to return to the access point name configuration module.

5. The system according to claim 2, wherein, the mobile terminal comprises the access point name configuration module and radio communication module which are interconnected, wherein:
the radio communication module is configured to: after sending a packet data protocol activation request to a network side network element and encountering a packet data protocol activation rejection from the network element, send a reason for a packet data protocol activation failure to the access point name configuration module;
the access point name configuration module is configured to: if it is analyzed that the packet data protocol activation failure is caused by an error of the access point name information, send the access point name inquiry request to the radio communication module.

6. The system according to claim 4 or 5, wherein,
the radio communication module is further configured to: according to the access point name inquiry request, send the access point name inquiry request to the access point name server; and return the access point name inquiry response returned by the access point name server to the access point name configuration module;
the access point name configuration module is further configured to: set the access point name information carried in the access point name inquiry response.

7. A mobile terminal for implementing an access point name setting, comprising an access point name configuration module and a radio communication module which are interconnected, wherein:
the access point name configuration module is configured to: when access point name information is required to be set, send an access point name inquiry request to the radio communication module;
the radio communication module is configured to: according to the received access point name inquiry request, send the access point name inquiry request to an access point name server.

8. The mobile terminal according to claim 7, wherein,
the access point name configuration module is configured to send the access point name inquiry request to the radio communication module by the following way when the access point name information is required to be set: sending an international mobile subscriber identity inquiry request to the radio communication module when starting up, comparing international mobile subscriber identity information returned by the radio communication module with the international mobile subscriber identity information in the access point name information, and if the two are different, sending the access point name inquiry request to the radio communication module;
the radio communication module is further configured to: according to the international mobile subscriber identity inquiry request, carry the international mobile subscriber identity information of a current universal subscriber identity module in an international mobile subscriber identity inquiry response to return to the access point name configuration module.

9. The mobile terminal according to claim 7, wherein,
the radio communication module is further configured to: after sending a packet data protocol activation request to a network side network element and encountering a packet data protocol activation rejection from the network element, send a reason for a packet data protocol activation failure to the access point name configuration module;
the access point name configuration module is configured to send the access point name inquiry request to the radio communication module by the following way when the access point name information is required to be set: if it is analyzed that the packet data protocol activation failure is caused by an error of the access point name information, sending the access point name inquiry request to the radio communication module.

10. The mobile terminal according to claim 8 or 9, wherein,
the radio communication module is further configured to: return an access point name inquiry response returned by the access point name server to the access point name configuration module;
the access point name configuration module is further configured to: set the access point name information carried in the access point name inquiry response.

11. A method for implementing an access point name setting, comprising:
a mobile terminal sending an access point name inquiry request to an access point name server when access point name information is required to be set; and
the access point name server which receives the access point name inquiry request returning access point name information corresponding to the mobile terminal to the mobile terminal through an access point name inquiry response.

12. The method according to claim 11, further comprising:
the terminal mobile performing setting according to the access point name information returned by the access point name server.

13. The method according to claim 11, wherein,
the access point name inquiry request carries international mobile subscriber identity information of a universal subscriber identity module;
the step of the access point name server returning the access point name information corresponding to the mobile terminal to the mobile terminal through an access point name inquiry response comprises: according to the international mobile subscriber identity information carried in the access point name inquiry request, inquiring about a corresponding relation record of the international mobile subscriber identity information and access point name information, finding the access point name information corresponding to the international mobile subscriber identity information with a maximum matching mode, and carrying the access point name information in the access point name inquiry response to return to the mobile terminal.

14. The method according to claim 13, wherein, the step of a mobile terminal sending an access point name inquiry request to an access point name server when access point name information is required to be set comprises:
the mobile terminal inquiring about the international mobile subscriber identity information of the current universal subscriber identity module when starting up, comparing the international mobile subscriber identity information with the international mobile subscriber identity information in the access point name information, and if the two are different, sending the access point name inquiry request;
or, after sending a packet data protocol activation request to a network side network element and encountering a packet data protocol activation rejection from the network element, if it is analyzed that a packet data protocol activation failure is caused by an error of the access point name information, the mobile terminal sending the access point name inquiry request.

15. The method according to claim 13 or 14, further comprising:
when the access point name server changes the corresponding relation record of the international mobile subscriber identity information and access point name information, carrying changed access point name information in an access point name change command to send to the mobile terminal; and
the mobile terminal performing setting according to the received access point name change command.
